# EUROPÄISCHE PATENTSCHRIFT

(11) **EP 4 219 212 B1**
(45) Veröffentlichungstag und Bekanntmachung des Hinweises auf die Patenterteilung: **27.08.2025**
(21) Anmeldenummer: 23163559.0
(22) Anmeldetag: 15.04.2014
(51) Int. Cl.: B60L 1/00, B60L 1/02, B60L 1/14, B60L 3/00, B60L 15/20, B60W 10/00, B61C 5/02, B61C 17/04, B60L 3/12, B60W 20/00, B61C 3/00, F02D 25/00, B60K 6/46, B60L 50/10, B60L 50/13, B60L 50/15, B60W 30/194, B60W 20/15, B61C 5/00, B60K 5/08

(54) **BETRIEB EINER ANORDNUNG MIT MEHREREN VERBRENNUNGSMOTOREN UND ELEKTRISCHEN MASCHINEN ZUM VERSORGEN EINES SCHIENENFAHRZEUGS MIT ELEKTRISCHER ENERGIE**
OPERATION OF AN ASSEMBLY HAVING A PLURALITY OF INTERNAL COMBUSTION ENGINES AND ELECTRICAL MACHINES FOR SUPPLYING A RAIL VEHICLE WITH ELECTRICAL ENERGY
FONCTIONNEMENT D'UN ENSEMBLE COMPRENANT PLUSIEURS MOTEURS À COMBUSTION INTERNE ET DES MACHINES ÉLECTRIQUES POUR ALIMENTER UN VÉHICULE FERROVIAIRE EN ÉNERGIE ÉLECTRIQUE

(30) Priorität: 18.04.2013 DE 102013207047
(43) Veröffentlichungstag der Anmeldung: 02.08.2023
(62) Teilanmeldung aus: 14718374.3
(73) Patentinhaber: Bombardier Transportation GmbH, 10785 Berlin (DE)
(72) Erfinder: SONNLEITNER, Werner, 34292 Ahnatal (DE); BUCHNER, Andreas, 8037 Zürich (CH); KRETZ, Michael, 5603 Staufen (CH)
(74) Vertreter: Patentanwälte Bressel und Partner mbB

(56) Entgegenhaltungen:
- WO-A1-2008/089571
- WO-A2-2010/075326
- US-A1- 2012 318 163
- US-A1- 2013 046 424

## Beschreibung

Die Erfindung betrifft eine Anordnung zum Versorgen eines Schienenfahrzeugs mit elektrischer Energie, wobei die Anordnung zumindest zwei Verbrennungsmotoren aufweist, denen jeweils eine elektrische Maschine zum Erzeugen der elektrischen Energie zugeordnet ist. Die elektrische Maschine ist mechanisch mit dem zugeordneten Verbrennungsmotor gekoppelt, sodass sie bei einem Generator-Betrieb der elektrischen Maschine von dem Verbrennungsmotor angetrieben wird. Der Verbrennungsmotor und die elektrische Maschine bilden eine Verbrennungsmotor-Maschinen-Kombination. Die Erfindung betrifft ferner ein Verfahren zum Betreiben der Anordnung und ein Schienenfahrzeug mit der Anordnung.

Die Anordnung dient insbesondere zum Versorgen von elektrischen Traktionsmotoren in einem Schienenfahrzeug mit elektrischer Energie und optional außerdem zum Versorgen von zusätzlichen elektrischen Hilfsbetrieben für den Betrieb des Schienenfahrzeugs mit elektrischer Energie. Bei dem Schienenfahrzeug handelt es sich z.B. um eine Lokomotive. Die Erfindung ist jedoch nicht darauf beschränkt. Vielmehr kann das Schienenfahrzeug z.B. auch ein Zugverband sein.

Unter Hilfsbetrieben werden Einrichtungen verstanden, die zwar nicht unmittelbar Traktion erzeugen, insbesondere aber für den Fahrbetrieb des Schienenfahrzeugs zwingend erforderlich sein können. Hilfsbetriebe können allgemein dadurch definiert werden, dass sie über einen eigenen Hilfsbetriebe-Wechselrichter oder eine Mehrzahl eigener Hilfsbetriebe-Wechselrichter aus dem üblicherweise vorhandenen Gleichspannungs-Zwischenkreis mit elektrischer Energie versorgt werden. Zu den Hilfsbetrieben gehören z.B. Ventilatoren und andere Kühleinrichtungen, die die Verbrennungsmotoren, die Traktionsmotoren und/oder andere für den Fahrbetrieb erforderliche Einrichtungen (z.B. Stromrichter) kühlen. Ferner ist für den Fahrbetrieb eine Bremsanlage erforderlich und gehören daher Komponenten der Bremsanlage wie Luftkompressor zu den Hilfsbetrieben. Weitere Beispiele für Hilfsbetriebe sind eine Feuerlöscheinrichtung des Schienenfahrzeugs, elektronische Einrichtungen zur Steuerung des Betriebs des Schienenfahrzeugs, Batterieladegeräte, für den Fahrbetrieb zumindest zeitweise erforderliche Heizungen, z.B. Scheibenheizung der Frontscheibe, und/oder Beleuchtungseinrichtung im Fahrerabteil. Optional können von den Hilfsbetrieben elektrische Einrichtungen unterschieden werden, die lediglich für den Komfort von Passagieren zur Verfügung stehen, wie zum Beispiel Leuchten in Fahrzeug-Abteilen. Solche elektrischen Einrichtungen werden üblicherweise in Zügen über die so genannte Zug-Sammelschiene mit elektrischer Energie versorgt. Die Zug-Sammelschiene ist nicht über den Hilfsbetriebe-Wechselrichter oder einen der Hilfsbetriebe-Wechselrichter mit dem Gleichspannungs-Zwischenkreis verbunden, sondern über einen eigenen Wechselrichter.

Es ist bekannt, dass die von den elektrischen Maschinen erzeugte elektrische Energie über zumindest einen Gleichrichter (im Folgenden: Generator-Gleichrichter, da von dem Generator erzeugter Wechselstrom gleichgerichtet wird) in einen Gleichspannungs-Zwischenkreis eingespeist wird. An den Gleichspannungszwischenkreis sind typischerweise mehrere Wechselrichter angeschlossen, die wiederum den Wechselstrom auf dem gewünschten elektrischen Spannungsniveau oder in dem gewünschten elektrischen Spannungsbereich erzeugen, der für die auf der Wechselspannungsseite angeschlossenen Verbraucher und Systeme benötigt wird. Zusätzlich zu den Wechselrichtern können auf deren Gleichspannungsseite Gleichspannungswandler und/oder auf deren Wechselspannungsseite Transformatoren vorgesehen sein, um das Spannungsniveau zu verändern. Auch andere elektrische Konverter können an den Gleichspannungs-Zwischenkreis entweder direkt oder indirekt angeschlossen sein. Ferner können außer den genannten Hilfsbetrieben auch andere elektrische Verbraucher, wie z.B. für den Komfort von Passagieren vorhandene elektrische Einrichtungen wie Licht, Klimaanlage und Informationssysteme, mit elektrischer Energie aus dem Gleichspannungs-Zwischenkreis versorgt werden, z. B. über einen anderen Wechselrichter als die für den Fahrbetrieb erforderlichen Hilfsbetriebe.

Z.B. sind an den Gleichspannungs-Zwischenkreis angeschlossen: eine Mehrzahl von Traktionsmotoren des Schienenfahrzeugs über ein oder mehrere Traktionswechselrichter; eine Zugstromsammelschiene über einen zusätzlichen Konverter oder unmittelbar; für den Fahrbetrieb erforderliche Hilfsbetriebe über einen Hilfsbetriebe-Wechselrichter. Ferner können weitere Konverter an dem Zwischenkreis angeschlossen sein, z.B. zum Zweck der Umsetzung überflüssiger Energie, die beim Bremsen des Schienenfahrzeugs in den Zwischenkreis eingespeist wird, in Wärme. Ein Beispiel einer solchen Anordnung ist in WO 2009/077184 A1 beschrieben.

Die Erfindung betrifft den Fall, dass mehr als ein Verbrennungsmotor vorhanden ist und jeweils zumindest eine elektrische Maschine mit dem Verbrennungsmotor gekoppelt ist. Es ist daher möglich, dass lediglich ein Teil der vorhandenen elektrischen Maschinen elektrische Energie erzeugt, während gleichzeitig ein anderer Teil der elektrischen Maschinen als Motor betrieben wird, insbesondere um den zugeordneten Verbrennungsmotor im Leerlaufbetrieb anzutreiben. Dies hat den Vorteil, dass die Kraftstoffzufuhr zu dem Verbrennungsmotor abgeschaltet werden kann. Alternativ ist es aber auch möglich, dass zumindest einer der Verbrennungsmotoren lediglich bei niedriger Drehzahl läuft und daher von der oder den zugeordneten elektrischen Maschinen lediglich eine geringe elektrische Leistung erzeugt wird, die z.B. nicht oder nicht nennenswert zu der elektrischen Leistung beiträgt, die in den Gleichspannungs-Zwischenkreis eingespeist wird.

Grundsätzlich soll zwischen folgenden Betriebszuständen eines Verbrennungsmotors unterschieden werden:
- Die beweglichen Teile des Verbrennungsmotors bewegen sich nicht. Dieser Zustand wird als der abgeschaltete Zustand bezeichnet. In diesem Zustand wird kein Kraftstoff in die Verbrennungsräume des Motors eingebracht.
- Die beweglichen Teile des Verbrennungsmotors bewegen sich angetrieben durch die elektrische Maschine, die mit dem Motor gekoppelt ist. Auch in diesem Zustand wird kein Kraftstoff in die Verbrennungsräume des Motors eingebracht dieser Zustand wird als Schubabschaltung bezeichnet.
- Der Verbrennungsmotor erzeugt mechanische Leistung. Dementsprechend wird die mit dem Motor gekoppelte elektrische Maschine angetrieben und erzeugt elektrische Energie. In diesem Zustand wird Kraftstoff in die Verbrennungsräume eingebracht und verbrannt, um die mechanische Leistung zu erzeugen.

Insbesondere betrifft die Erfindung den Fall, dass vorübergehend wenigstens einer der Verbrennungsmotoren abgeschaltet wird.

Eine Mehrzahl von Verbrennungsmotor-Maschinen-Kombinationen bietet Vorteile im Teillastbetrieb des Schienenfahrzeugs, d.h. in einem Betrieb, in dem nicht die maximal mögliche elektrische Leistung benötigt wird. Im Teillastbetrieb reicht die mechanische Leistung lediglich eines Teils der Verbrennungsmotoren aus, um die erforderliche elektrische Leistung bereitzustellen. Neben einer Reduktion des Kraftstoffverbrauchs der Verbrennungsmotoren hat der Teillastbetrieb auch den Vorteil, dass die Geräuschbelastung der Umgebung geringer ist. Beispielsweise können vier Verbrennungsmotor-Maschinen-Kombinationen vorhanden sein, wobei vorzugsweise jede Kombination unabhängig von den anderen Kombinationen entweder im Leerlaufbetrieb oder am optimalen Leistungspunkt betrieben werden kann. Optional können für jede Kombination mehr als zwei Betriebsarten eingestellt werden, z.B. zusätzlich zu den beiden genannten Betriebsarten ein Betrieb mit mittlerer Leistung der als Generator betriebenen elektrischen Maschine.

Insbesondere wird hiermit für die weiteren möglichen Merkmale einer Anordnung mit mehreren Verbrennungsmotor-Maschinen-Kombinationen auf die internationale Patentanmeldung mit der Anmeldenummer PCT/EP 2012/052705 Bezug genommen, die am 16. Februar 2012 eingereicht wurde. Insbesondere wird der gesamte Inhalt dieser Anmeldung hiermit in die vorliegende Anmeldung aufgenommen.

Es ist bekannt, die Verbrennungsmotoren vorzuwärmen, bevor sie gestartet werden. Insbesondere ist in der Praxis Kühlflüssigkeit in einem Kühlkreislauf zum Kühlen des Verbrennungsmotors vorhanden, wobei die Kühlflüssigkeit bei Bedarf vorgewärmt wird. Die für die Vorwärmung benötigte Energie kann insbesondere durch Umsetzung elektrischer Energie in Wärme, durch exotherme chemische Prozesse (insbesondere die Verbrennung fossiler Brennstoffe) und/oder durch Freisetzung gespeicherter thermischer Energie (optional durch Entladung eines Latentwärmespeichers) gewonnen werden.

Aus der WO 2008/089571 A1 ist ein Verfahren zum Steuern einer gewünschten Gesamt-Ausgangsleistung eines Fahrzeugs bekannt, das eine Mehrzahl von Energiequellen aufweist. Diese Energiequellen geben elektrische Leistung auf einen gemeinsamen Gleichspannungszwischenkreis aus. Es wird eine Anzahl von zu verwendenden Energiequellen ausgewählt, und zwar entsprechend einem Schema, um dem Gleichspannungszwischenkreis Leistung zuzuführen. Die Energiequellen werden entsprechend dem Schema aktiviert. Wenn die Ausgangsleistung einer der Energiequellen sich von einer Ziel-Ausgangsleistung unterscheidet, werden Steuerparameter der Energiequelle angepasst, um den Unterschied zu korrigieren. In dem konkreten Ausführungsbeispiel der Fig. 17 in der genannten Druckschrift wird zunächst ermittelt, ob ein warmer Verbrennungsmotor verfügbar ist. In jedem Fall wird bei der Auswahl der Verbrennungsmotoren berücksichtigt, welcher Verbrennungsmotor in der Vergangenheit öfter als andere benutzt wurde, um die Verwendung ungefähr auszugleichen. Ferner kann die Auswahl zufällig geschehen oder in einem turnusgemäßen Zyklus. Wenn kein warmer Verbrennungsmotor verfügbar ist, wird der ausgewählte Verbrennungsmotor vorgewärmt.

WO 2010/075326 A2 beschreibt eine dieselelektrische Lokomotive mit zwei separaten Maschinensystemen. Die Ausgangsleistung der separaten Maschinensysteme kann kombiniert werden, um Traktionsmotoren der Lokomotive mit Leistung zu versorgen. Es kann vorgesehen sein, die einzelnen Maschinen periodisch zu starten, um die Maschinen zu schmieren und zu wärmen (sogar falls die Maschine nicht für die Erzeugung von Antriebsleistung benötigt wird), oder die einzelne Maschine kann durch das Lokomotiven-Steuerungssystem in Reaktion auf die Detektion einer niedrigen Maschinentemperatur oder eines anderen Faktors gestartet werden.

US 2013/0046424 A1 beschreibt Verfahren und Systeme zum Verteilen von Maschinenleistung über Schienenfahrzeuge. Eine oder mehr als eine der Maschinen kann einen Partikelfilter in der Maschinen-Abgasanlage enthalten. Wenn die Maschinenlast verteilt wird, ist eine Temperatur des Partikelfilters niedriger als erforderlich. Die Maschinen-Lastverteilung kann dann zeitweise angepasst werden, um die mit dem Filter gekoppelte Maschine bei höherer Last zu betreiben und auf diese Weise eine höhere Abgastemperatur zu erreichen, um die Regeneration des Filters zu unterstützen.

US 2012/0318163 A1 beschreibt ein Fahrzeug mit einem Maschinensystem und einem System zum Dissipieren von Leistung. Ein Luftstrom wird derart gerichtet, dass eine Komponente des Systems zum Dissipieren von Leistung gekühlt wird. Auch wird der Luftstrom derart gerichtet, dass eine Komponente des Maschinensystems gekühlt wird.

Es ist eine Aufgabe der vorliegenden Erfindung, die Verfügbarkeit der Verbrennungsmotoren in einer Anordnung zum Versorgen eines Schienenfahrzeugs mit elektrischer Energie zu erhöhen und dabei den Energieverbrauch zu reduzieren.

Insbesondere in der oben beschriebenen Weise können die Verbrennungsmotoren vor einem Start vorgewärmt werden. Es ist jedoch ein Grundgedanke der vorliegenden Erfindung, eine Vorwärmung der Verbrennungsmotoren nach Möglichkeit zu vermeiden. Bei der Auswahl der Verbrennungsmotoren für die Erzeugung elektrischer Energie wird daher der Start eines Verbrennungsmotors bevorzugt, zumindest wenn andernfalls eine Abkühlung des Verbrennungsmotors unter eine für den Start vorgegebene Mindesttemperatur stattfindet. Eine Bevorzugung des Starts eines solchen Verbrennungsmotors findet insbesondere im Vergleich zu einem Schema statt, gemäß dem die Verbrennungsmotoren ohne Berücksichtigung der Auskühlung für die Erzeugung elektrischer Energie ausgewählt werden.

Bei der Temperatur des Verbrennungsmotors, die für einen Start des Verbrennungsmotors einen vorgegebenen Mindestwert haben oder überschreiten muss, handelt es sich insbesondere um eine Kühlflüssigkeitstemperatur in einem Kühlkreislauf zum Kühlen des Verbrennungsmotors.

Insbesondere in dem oben erwähnten Teillastbetrieb kann es vorkommen, dass einer oder mehrere der Verbrennungsmotoren abgeschaltet werden. Dagegen wird der Betrieb in dem ebenfalls oben erwähnten Fall, in dem der Verbrennungsmotor von der elektrischen Maschine angetrieben wird, als Schubabschaltung bezeichnet. Eine Abkühlung des Verbrennungsmotors unter die für einen Start vorgegebene Mindesttemperatur kann insbesondere während eines Stillstandes des Schienenfahrzeugs (z.B. bei Halt in einem Bahnhof oder einer Haltestelle) stattfinden.

Wenn ein vor Auskühlung bedrohter Verbrennungsmotor gestartet wird, der ohne die bevorstehende Auskühlung gemäß einem Steuerungsschema nicht gestartet worden wäre, kann die Erzeugung der elektrischen Leistung auf die bereits vor dem Start des vor Auskühlung bedrohten Verbrennungsmotors betriebenen Verbrennungsmotoren (dies kann auch nur ein Verbrennungsmotor sein) und zusätzlich auf den neu gestarteten Verbrennungsmotor aufgeteilt werden. Es ist jedoch auch möglich, zumindest einen bereits in Betrieb befindlichen Verbrennungsmotor nach dem Start des vor Auskühlung bedrohten Verbrennungsmotors abzuschalten. Allerdings wird ein neu gestarteter Verbrennungsmotor zunächst in einem Zeitraum nach dem Start mit Kraftstoff versorgt werden und durch Verbrennung des Kraftstoffs mechanische Energie erzeugen, bevor er optional im Leerlaufbetrieb von der zugeordneten elektrischen Maschine angetrieben wird.

Indem ein von Auskühlung bedrohter Verbrennungsmotor gestartet wird, wird Energie für die Vorwärmung des Verbrennungsmotors gespart. Dem liegt der Gedanke zugrunde, dass jedenfalls während des normalen Betriebes des Schienenfahrzeugs sämtliche Verbrennungsmotoren für eine Erzeugung elektrischer Energie zur Verfügung stehen müssen. Ferner werden in vielen Anordnungen zum Erzeugen elektrische Energie für Schienenfahrzeuge Vorwärmanlagen für mehrere Verbrennungsmotoren miteinander gekoppelt. Bauartbedingt kann es unzulässig sein, die gemeinsame Vorwärmanlage auch nur für einen der Verbrennungsmotoren zur Vorwärmung zu nutzen, während ein anderer Verbrennungsmotor in Betrieb ist. Wenn bei einer solchen Vorwärmanlage keiner der Verbrennungsmotoren in Betrieb ist, könnte zwar bei Bedarf einer der Verbrennungsmotoren oder könnten mehrere der Verbrennungsmotoren vorgewärmt werden. Währenddessen wäre aber der Betrieb sämtlicher Verbrennungsmotoren, die über eine gemeinsame Vorwärmanlage verfügen, unzulässig. Im Fall gemeinsamer Vorwärmanlagen und der genannten Betriebsbeschränkungen erhöht die erfindungsgemäße Lösung daher die Verfügbarkeit der Verbrennungsmotoren.

Zum Beispiel können die Flüssigkeits-Kühlkreisläufe von zumindest zwei Verbrennungsmotoren miteinander verbunden sein oder durch Öffnen entsprechender Flüssigkeitsventile miteinander verbunden werden. Es ist eine Erwärmungseinrichtung zur Erwärmung der Kühlflüssigkeit vorgesehen. Aufgrund der Verbindung der Kühlkreisläufe kann diese Erwärmungseinrichtung für das Vorwärmen sämtlicher Verbrennungsmotoren genutzt werden, deren Flüssigkeits-Kühlkreisläufe miteinander verbunden sind.

Gemäß den Ansprüchen wird von einer Steuerung der Anordnung ermittelt, wie viele der Verbrennungsmotoren während eines Betriebszeitraumes des Schienenfahrzeugs zu betreiben sind. Bei der Auswahl der zu betreibenden Verbrennungsmotoren wird dann erfindungsgemäß berücksichtigt, ob ein oder mehrere der Verbrennungsmotoren vor Auskühlung bedroht sind.

Wie bereits erwähnt, kann ein Schema vorgegeben sein, das unter Berücksichtigung des momentanen Betriebszustandes der Anordnung mit mehreren Verbrennungsmotoren, unter Berücksichtigung der momentanen Anforderungen an die Anordnung und optional auch zukünftiger Anforderungen an die Anordnung und ferner optional unter Berücksichtigung von weiteren Parametern der Anordnung (wie z.B. Fehler eines Verbrennungsmotors) die momentan für die Erzeugung von elektrischer Energie zu nutzenden Verbrennungsmotoren auswählt. Erfindungsgemäß wird jedoch, wenn die Voraussetzungen für den Start eines vor Auskühlung bedrohten Verbrennungsmotors vorliegen, die gemäß dem Schema vorzunehmende Selektion abgeändert, indem der vor Auskühlung bedrohte Verbrennungsmotor gestartet wird.

Beim Betrieb der Anordnung mit mehreren Verbrennungsmotoren kann eine Priorisierung von Verbrennungsmotoren gemäß den folgenden beiden Verfahrensweisen vorgenommen werden, die optional auch miteinander kombiniert werden können. Erstens kann sich die Priorisierung nur auf die Reihenfolge der Starts oder Stopps der Verbrennungsmotoren auswirken und optional auch den Wechsel des Betriebes eines oder mehrerer der Verbrennungsmotoren durch Stopp von zumindest einem betriebenen Verbrennungsmotor und Start von zumindest einem anderen Verbrennungsmotor erlauben. Die Priorisierung hat in diesem Fall Einfluss auf den Start und den Stopp der Motoren, insbesondere auf den Startzeitpunkt bzw. Stoppzeitpunkt. Gemäß diesem Verfahren werden Motoren mit höherer Priorisierung früher gestartet und/oder später gestoppt. Die Anzahl der Betriebsstunden der höher priorisierten Motoren erhöht sich daher stärker als die der geringer priorisierten Motoren. Die durchschnittliche Auslastung der höher priorisierten Verbrennungsmotoren sinkt aber, da sich der Anteil der Zeiträume mit Leerlauf des Motors erhöht.

Zweitens kann sich die Priorisierung bei der Aufteilung der benötigten mechanischen Leistung der Verbrennungsmotoren auswirken. Höher priorisierte Motoren erzeugen dann im Teillastbetrieb eine höhere Leistung als niedriger priorisierte Motoren. Die Leistung wird daher ungleichmäßig aufgeteilt.

Insbesondere kann gemäß dem Schema eine sogenannte statische Priorisierung bei der Auswahl der Verbrennungsmotoren für den Betrieb durchgeführt werden, d.h. eine Priorisierung nach langfristigen, langsam ändernden Kriterien, und vorzugsweise auch eine dynamische Priorisierung bei der Selektion, nach kurzfristigen Kriterien, die höher als die Kriterien der statischen Priorisierung gewichtet sind. Eines von mehreren möglichen Kriterien der dynamischen Priorisierung kann erfindungsgemäß der Start eines vor Auskühlung bedrohten Verbrennungsmotors sein. Andere Kriterien der dynamischen Priorisierung sind z.B. bekannte Einschränkungen der Verfügbarkeit von einem oder mehreren der Verbrennungsmotoren, z.B. bei einem bekannten Fehler, und/oder eine zu hohe Beladung eines Partikelfilters im Abgasstrang eines oder mehrerer der Verbrennungsmotoren. Insbesondere bei Dieselmotoren sind solche Partikelfilter bekannt. Bei einer zu geringen Abgastemperatur wird der Partikelfilter zunehmend beladen. Im Fall einer Erhöhung der Abgastemperatur, die insbesondere durch eine stärkere Belastung (d.h. erhöhte mechanische Leistung) des Verbrennungsmotors erreicht wird, kann die Beladung des Partikelfilters bekanntermaßen wieder reduziert werden.

Die Kriterien der dynamischen Priorisierung, welche höher zu gewichten sind als die Kriterien der statischen Priorisierung, sind allgemein formuliert insbesondere Kriterien, bei deren Nichtbeachtung Komponenten des Schienenfahrzeugs und insbesondere der Anordnung mit den Verbrennungsmotoren und/oder der Fahrbetrieb gefährdet sein kann.

Ein Kriterium der statischen Priorisierung ist z.B. der über längere Zeiträume insgesamt in gleicher Weise durchgeführte Betrieb der einzelnen Verbrennungsmotoren. Insbesondere können dabei die Betriebsstunden, der Kraftstoffverbrauch, die Anzahl der ausgeführten Umdrehungen der beweglichen Teile des Verbrennungsmotors und/oder die erzeugte mechanische Energie berücksichtigt werden. Alternativ oder zusätzlich kann die Auswahl der Motoren, die betrieben werden sollen, zufällig, gemäß einer stochastischen Verteilung und/oder nach dem Rotationsprinzip erfolgen. Ein weiteres Kriterien der statischen Priorisierung ist z.B. die Anzahl der Startvorgänge für die einzelnen Verbrennungsmotoren, wobei über lange Zeiträume diese Anzahlen gleich groß sein sollen.

Bei der Bestimmung der Anzahl der Verbrennungsmotoren, die gleichzeitig betrieben werden sollen, können insbesondere bestimmte Betriebsvorgaben, wie z.B. schnelle Reaktionsfähigkeit für Leistungsänderungen bei Fahrt in hügligem Gelände oder vergleichsweise langsame Reaktionsfähigkeit bei Fahrt im ebenen Gelände, berücksichtigt werden. Optional kann der Fahrzeugführer die Anzahl vorgegeben oder beeinflussen. Auch das Schema der Selektion kann der Fahrzeugführer optional beeinflussen oder er kann sogar direkt vorgeben, welcher Verbrennungsmotor als nächstes gestartet werden soll und/oder die Leistung von welchem Verbrennungsmotor gesteigert oder verringert werden soll. Auch das Stoppen eines Verbrennungsmotors kann der Fahrzeugführer optional unmittelbar vorgeben.

In jedem Fall (nicht nur im Fall einer zusätzlichen dynamischen Priorisierung) kann insbesondere gemäß den zuvor genannten Kriterien der statischen Priorisierung eine Reihenfolge für den Start der Verbrennungsmotoren ermittelt werden. Insbesondere wenn die erzeugte elektrische Leistung erhöht werden muss, z.B. wenn eine entsprechende erhöhte Anforderung gestellt wird, kann dann der in der Reihenfolge erste Verbrennungsmotor gestartet werden. Alternativ oder zusätzlich ergibt sich aus dem Schema, ob bei einem Teillastbetrieb zunächst die Leistung eines bereits betriebenen Verbrennungsmotors erhöht wird und/oder ob zumindest ein zusätzlicher Verbrennungsmotor gestartet wird.

Gemäß der Erfindung kann die durch ein Selektionsschema vorgegebene oder die gemäß dem Selektionsschema erhaltene Reihenfolge für den Start der Verbrennungsmotoren verändert werden. Z.B. wird ein gemäß der Reihenfolge als nächstes zu startender Verbrennungsmotor nicht gestartet und stattdessen ein vor Auskühlung bedrohter Verbrennungsmotor gestartet. Insbesondere kann daher eine Umordnung der Reihenfolge der zu startenden Verbrennungsmotoren stattfinden. Der Start eines vor Auskühlung bedrohten Verbrennungsmotors muss nicht unbedingt sofort ausgeführt werden.

Vorzugsweise werden bei der statischen Priorisierung die Anzahl der Betriebsstunden und ferner auch der Kraftstoffverbrauch langfristig gleichmäßig auf die vorhandenen (insbesondere auf die fehlerfrei arbeitenden) Verbrennungsmotoren aufgeteilt. Die sich daraus ergebende statische Priorisierung wird jedoch vorzugsweise von der dynamischen Priorisierung verändert. Insbesondere bedeutet dies, dass ein Motor trotz höherer statischer Priorisierung nicht betrieben wird, wenn dies die dynamische Priorisierung vorgibt. Anlass für die Veränderung der statischen Priorisierung durch die dynamische Priorisierung ist z.B. ein Fehler des Motors (etwa wegen zu hoher Temperaturen, nicht ausreichender Mengen, insbesondere Füllstände von Betriebsmitteln oder zu hoher Drehzahlen).

Im Fall der statischen und insbesondere auch der dynamischen Priorisierung wird die Anzahl der insgesamt stattfindenden Startvorgänge erhöht. Da jeder Startvorgang aber auch Energie verbraucht und zu einem Verschleiß der beteiligten Komponenten führt, wird die Priorisierung durch geeignete Zusatzkriterien vorzugsweise so ausgelegt, dass die Startanzahl so wenig wie möglich erhöht wird. Solche Zusatzkriterien sind z.B. die Temperatur der Verbrennungsmotoren, eine Hysterese bei der Ausführung von Starts und Stopps (d.h. ein vor Auskühlung bedrohter Verbrennungsmotor, der gestartet wird, muss eine vorgegebene Mindesttemperatur erreichen, bevor er wieder abgeschaltet werden darf) und/oder eine Verzögerung bei der Ausführung eines Stopps eines Verbrennungsmotors, der kurz zuvor gestartet wurde (d.h. der von dem Schema ermittelte Stopp wird noch nicht ausgeführt und bei Veränderung der Anforderungen möglicherweise langfristig nicht ausgeführt).

Bevorzugter Maßen werden abgeschaltete Verbrennungsmotoren nur soweit wie erforderlich gekühlt. Insbesondere ist es üblich, zusätzlich zu der oben erwähnten Flüssigkeitskühlung der Verbrennungsmotoren den Raum, in dem sich der jeweilige Verbrennungsmotor befindet und in dem sich auch die mit ihm kombinierte elektrische Maschine befindet, durch Erzeugen eines Kühlluftstromes durch den Raum zu kühlen. Hierfür werden Ventilatoren eingesetzt. Vorzugsweise ist jeder Raum, in dem sich eine Verbrennungsmotor-Maschinen-Kombination befindet, mit jeweils zumindest einem Ventilator kombiniert. Dabei ist es nicht ausgeschlossen, dass die Räume, in denen sich die verschiedenen Verbrennungsmotor-Maschinen-Kombinationen befinden, miteinander verbunden sind, sodass ein Luftaustausch zwischen den verschiedenen Räumen stattfinden kann. Der einer Kombination zugeordnete Ventilator erzeugt jedoch einen Kühlluftstrom überwiegend oder ausschließlich durch den Raum, der ihm zugeordneten Verbrennungsmotor-Maschinen-Kombination.

Es wird nun vorgeschlagen, zumindest einen Ventilator, der einer Verbrennungsmotor-Maschinen-Kombination zugeordnet ist, abhängig davon zu betreiben, ob der zugeordnete Verbrennungsmotor in Betrieb ist oder still steht. Insbesondere wird der Ventilator nur dann betrieben, wenn eine Temperatur der Verbrennungsmotor-Maschinen-Kombination einen vorgegebenen Grenzwert überschreitet und wenn der zugeordnete Verbrennungsmotor in Betrieb ist (d.h. die beweglichen Teile des Motors bewegen sich), d.h. er erzeugt einen Kühlluftstrom durch den Raum, in dem sich die zugeordnete Verbrennungsmotor-Maschinen-Kombination befindet. Im Folgenden werden der Ventilator oder die Ventilatoren, der/die einer Verbrennungsmotor-Maschinen-Kombination zugeordnet ist/sind, als Belüftungseinheit bezeichnet. Die verschiedenen Belüftungseinheiten der Motor-Maschinen-Kombinationen bilden insgesamt eine Belüftungseinrichtung. Der genannte Temperaturgrenzwert wird im Folgenden auch als zweiter vorgegebener Temperaturgrenzwert bezeichnet, um ihn von einem ersten vorgegebenen Temperaturgrenzwert zu unterscheiden, der für die Ermittlung genutzt werden kann, ob sich ein Verbrennungsmotor so weit abgekühlt hat, dass er deshalb wieder gestartet werden soll.

Das Betreiben der Belüftungseinheiten abhängig vom Betrieb des zugeordneten Verbrennungsmotors und abhängig von der Temperatur hat den Vorteil, dass die Verbrennungsmotoren langsamer abkühlen und der Start eines vor Auskühlung bedrohten Verbrennungsmotors daher verzögert wird. Dies reduziert die für die Startvorgänge der Verbrennungsmotoren benötigte Energie und reduziert ebenfalls auch den Verschleiß der Verbrennungsmotoren und auch der elektrischen Maschinen. Insbesondere kann die einer Motor-Maschinen-Kombination zugeordnete Belüftungseinheit abgeschaltet bleiben (zum Beispiel bleibt der Ventilator oder bleiben die Ventilatoren der Belüftungseinheit abgeschaltet), bis ein Temperaturgrenzwert der Verbrennungsmotor-Temperatur (der bei der Beschreibung einer Ausführungsform im Folgenden auch als dritter Temperaturgrenzwert bezeichnet wird) erreicht oder überschritten wird. Dabei liegt der Temperaturgrenzwert insbesondere über dem ersten vorgegebenen Temperaturgrenzwert, bei dessen Unterschreiten der abgeschaltete Verbrennungsmotor wieder gestartet wird.

Insbesondere wird eine Anordnung nach Anspruch 1 vorgeschlagen.

Die Erfindung betrifft ferner ein Schienenfahrzeug, das die Anordnung gemäß einer der Ausgestaltungen aufweist, die in dieser Beschreibung und den Figuren offenbart sind.

Es wird auch ein Verfahren nach Anspruch 7 vorgeschlagen.

Insbesondere kann die Steuerung den anderen Verbrennungsmotor bei Erreichen oder Unterschreiten des vorgegebenen Temperaturgrenzwertes starten, obwohl eine Motorleistung des Verbrennungsmotors oder der Verbrennungsmotoren, die bereits in Betrieb sind, für die Versorgung des Schienenfahrzeugs mit elektrischer Energie ausreicht.

Insbesondere kann die Steuerung oder eine übergeordnete Steuerung die benötigte Motorleistung ermitteln. Im Teillastbetrieb, also wenn nicht die maximal mögliche Leistung der Anordnung gefordert ist, kann die Situation auftreten, dass zumindest einer der Verbrennungsmotoren der Anordnung abgeschaltet werden kann. Wenn nun ein abgeschalteter Verbrennungsmotor vor Auskühlung bedroht ist, was insbesondere durch Feststellen einer der o.g. Bedingungen anhand eines Vergleichs der ermittelten Temperatur mit dem vorgegebenen Temperaturgrenzwert festgestellt wird, wird der vor Auskühlung bedrohte Verbrennungsmotor gestartet, obwohl dies für die Erzeugung der geforderten Motorleistung nicht nötig ist. Dies kann auch dann gelten, wenn die geforderte Motorleistung beim Eintreten der genannten Bedingung gleich bleibt oder sogar abnimmt.

Alternativ oder zusätzlich kann die Steuerung die Motorleistung des bereits in Betrieb befindlichen Verbrennungsmotors oder der bereits in Betrieb befindlichen Verbrennungsmotoren reduzieren, sobald der andere Verbrennungsmotor gestartet ist und zu einer Gesamt-Motorleistung sämtlicher in Betrieb befindlicher Verbrennungsmotoren beiträgt.

Auf diese Weise ist es nicht erforderlich, einen bereits in Betrieb befindlichen Verbrennungsmotor zu stoppen, d.h. außer Betrieb zu nehmen, wenn der vor Auskühlung bedrohte Verbrennungsmotor gestartet wird. Dies ist insbesondere dann von Vorteil, wenn zu häufige Stopps und Starts von Verbrennungsmotoren vermieden werden sollen.

Gemäß den Ansprüchen weist die Anordnung eine Belüftungseinrichtung zum Belüften und somit zum Kühlen der Motor-Maschinen-Kombinationen auf. Jeder der Motor-Maschinen-Kombinationen ist eine von mehreren Belüftungseinheiten der Belüftungseinrichtung zugeordnet, so dass die Belüftungseinheiten während ihres Betriebes hauptsächlich oder ausschließlich jeweils die ihr zugeordnete Motor-Maschinen-Kombination kühlen. Jede der Motor-Maschinen-Kombinationen ist mit jeweils zumindest einem Temperatursensor kombiniert und die Belüftungseinheiten werden/sind trotz des Betriebes des Schienenfahrzeugs jeweils dann abgeschaltet, wenn der Verbrennungsmotor der ihr zugeordneten Motor-Maschinen-Kombination außer Betrieb ist oder wenn ein Temperatur-Messwert des Temperatursensors oder der Temperatursensoren der ihr zugeordneten Motor-Maschinen-Kombination ein Temperatur-Kriterium erfüllt, nämlich entweder kleiner als der zweite vorgegebene Temperaturgrenzwert ist oder kleiner als oder gleich dem zweiten vorgegebenen Temperaturgrenzwert ist.

Zusätzlich ist vorzugsweise ein dritter Temperaturgrenzwert vorgegeben, der höher liegt als der zweite vorgegebene Temperaturgrenzwert. Z.B. liegen der zweite Temperaturgrenzwert bei 30°C und der dritte Temperaturgrenzwert bei 50°C. Wenn der Temperatur-Messwert des Temperatursensors oder der Temperatursensoren der zugeordneten Motor-Maschinen-Kombination größer als der dritte vorgegebene Temperaturgrenzwert ist oder wenn - in einem anderen Fall - der Temperatur-Messwert größer als oder gleich dem dritten vorgegebenen Temperaturgrenzwert ist, ist/wird die zugeordnete Belüftungseinheit unabhängig davon eingeschaltet, ob der Verbrennungsmotor der Kombination in Betrieb oder außer Betrieb ist. Dadurch kann einer Überhitzung von Komponenten der Motor-Maschinen-Kombination in jedem Fall entgegengewirkt werden, auch wenn äußere Einflüsse und/oder andere Verbrennungsmotoren zu einer Erwärmung geführt haben.

Wenn der Temperatur-Messwert größer als der zweite vorgegebene Temperaturgrenzwert (z.B. 30°C) ist und der zugeordnete Verbrennungsmotor in Betrieb ist, wird auch die zugeordnete Belüftungseinheit betrieben. Auf diese Weise wird ebenfalls einer Überhitzung vorgebeugt. Es werden aber nur diejenigen Belüftungseinheiten betrieben, die benötigt werden. Insbesondere wird dadurch die Geräuschbildung minimiert. Von Bedeutung ist die Geräuschbildung insbesondere beim Stillstand des Schienenfahrzeugs in Bahnhöfen oder an Haltestellen. Im Gegensatz zu einem Betrieb eines Verbrennungsmotors, von dem nur dann gesprochen wird, wenn die beweglichen Teile des Verbrennungsmotors in Bewegung sind, wird von einem Betrieb des Schienenfahrzeugs auch dann gesprochen, wenn dieses still steht (z.B. beim Aufenthalt in einem Bahnhof), jedoch zumindest einer der Verbrennungsmotoren in Betrieb ist. Wenn das Schienenfahrzeug daher still steht, kann die maximale Anzahl der gleichzeitig betriebenen Belüftungseinheiten auf einen Wert beschränkt werden, der kleiner als die Anzahl der vorhandenen Belüftungseinheiten ist. Dem liegt der Gedanke zugrunde, dass im Stillstand des Schienenfahrzeugs niemals die maximal mögliche Gesamtleistung der Verbrennungsmotoren benötigt wird. Außerdem steht das Schienenfahrzeug häufig dann still, wenn es sich in einem Bahnhof oder an einer Haltestelle befindet. Die Geräuschbildung ist daher zu minimieren.

Z.B. wird bei insgesamt vier Motor-Maschinen-Kombinationen die maximale Anzahl der im Stillstand des Schienenfahrzeugs betriebenen Belüftungseinheiten auf zwei festgesetzt. Dies bedeutet, dass auch beim Betrieb von mehr als einem Verbrennungsmotor und insbesondere auch mehr als zwei Verbrennungsmotoren im Stillstand des Schienenfahrzeugs lediglich zwei Belüftungseinheiten betrieben werden. Die Auswahl der zu betreibenden Belüftungseinheiten kann anhand verschiedener Kriterien getroffen werden, insbesondere der Geräuschbildung, der Temperatur im Maschinenraum und der Temperaturdifferenz zwischen den verschiedenen Verbrennungsmotoren im Maschinenraum. Wenn sich auf jeder Seite des Schienenfahrzeugs (also rechts und links in Fahrtrichtung gesehen) jeweils zwei Motor-Maschinen-Kombinationen befinden, kann vorgegeben sein, dass auf jeder Seite maximal eine Belüftungseinheit betrieben werden darf, wenn sich das Schienenfahrzeug im Stillstand befindet. Dadurch wird die Geräuschbildung weiter reduziert. Alternativ oder zusätzlich kann die Geräuschbildung der einzelnen Belüftungseinheiten dadurch gesteuert werden, dass ihre Belüftungsleistung eingestellt wird. Insbesondere kann dies durch Einstellen (insbesondere durch Reduzieren) der Wechselstromfrequenz des elektrischen Wechselstroms erreicht werden, mit dem die Belüftungseinheit versorgt wird.

Komponenten der Motor-Maschinen-Kombination, die insbesondere vor Übertemperatur zu schützen sind, schließen die Kupplung im Antriebsstrang zwischen Verbrennungsmotor und elektrischer Maschine, die elektrischen Schütze der elektrischen Maschine zum elektrischen Anschluss der Maschine an das elektrische Bordnetz und insbesondere an den Gleichspannungszwischenkreis sowie die mechanischen Schwingungsdämpfer des Verbrennungsmotors mit ein.

Insbesondere zum Schutz dieser und weiterer Komponenten der Kombinationen dient die folgende bevorzugte Vorgehensweise. In einem ersten Schritt wird bei Erreichen eines vierten vorgegebenen Temperaturgrenzwertes (z.B. 60°C) durch den Temperatur-Messwert die Wechselstromfrequenz des Lüfter-Versorgungsstromes auf den Maximalwert erhöht (z.B. 60 Hz). Beim Betrieb der Belüftungseinheit unterhalb des vierten vorgegebenen Temperaturgrenzwertes ist die Wechselstromfrequenz geringer und liegt entweder konstant bei ihrem Minimalwert (z.B. 45 Hz) oder wird mit zunehmender Temperatur stetig oder stufenweise angehoben, bis bei Erreichen des vierten vorgegebenen Temperaturgrenzwertes der Maximalwert der Frequenz erreicht ist. Die genannte Wechselstromfrequenz wird insbesondere durch entsprechende Steuerung eines Hilfsbetriebeumrichters erzielt, der an den Gleichspannungszwischenkreis angeschlossen ist, in den die elektrischen Maschinen elektrische Energie einspeisen.

Als weitere Schutzmaßnahme kann ein fünfter Temperaturgrenzwert vorgegeben werden/sein. Erreicht der Temperatur-Messwert den fünften vorgegebenen Temperaturgrenzwert, kann die Leistung des zugeordneten Verbrennungsmotors reduziert werden, insbesondere durch Absenkung der Drehzahl des Verbrennungsmotors auf eine Leerlaufdrehzahl.

In bevorzugter Ausgestaltung ist zumindest eine der Belüftungseinheiten und sind vorzugsweise alle Belüftungseinheiten mit jeweils einem Ventilatorschutzschalter versehen. Ferner kann die Funktion dieses Schutzschalters überwacht werden, z.B. über zusätzliche elektrische Kontakte des Schutzschalters. Der Ventilatorschutzschalter schaltet den Ventilator oder die Ventilatoren ab, wenn der elektrische Motor des Ventilators überlastet ist, z.B. bei einem Windungskurzschluss.

Bevorzugtermaßen wird die Leistung der Belüftungseinheit und optional sogar aller anderen in Betrieb befindlichen Belüftungseinheiten erhöht und insbesondere auf die maximal mögliche Belüftungsleistung erhöht, wenn die Überwachung des Ventilatorschutzschalters feststellt, dass der Ventilatorschutzschalter nicht mehr funktionsfähig ist. Die gleiche Maßnahme kann alternativ oder zusätzlich ergriffen werden, wenn der Temperatursensor der Motor-Maschinen-Kombination defekt ist oder der entsprechende Temperatur-Messwert aus anderen Gründen (z.B. bei einem Defekt der Auswertungseinrichtung zur Auswertung des Temperaturmesswertes) nicht mehr feststellbar ist. Insbesondere wird die maximale Belüftungsleistung wieder dadurch eingestellt, dass die Frequenz des elektrischen Versorgungsstromes auf ihren Maximalwert angehoben wird.

Ausführungsbeispiele der Erfindung werden nun unter Bezugnahme auf die beigefügte Zeichnung beschrieben. Die einzelnen Figuren der Zeichnung zeigen schematisch:
- Fig. 1: eine Ausführungsform einer Anordnung zum Versorgen von zumindest einem Traktionsmotor und zusätzlichen elektrischen Hilfsbetrieben in einem Schienenfahrzeug mit elektrischer Energie,
- Fig. 2: ein Steuerungssystem in einem Schienenfahrzeug,
- Fig. 3: eine Draufsicht auf einen Maschinenraum mit drei Motor-Maschinen-Kombinationen, denen jeweils eine Belüftungseinheit zugeordnet ist, und
- Fig. 4: ein Flussdiagramm zur Darstellung des Ablaufs einer Steuerung des Betriebs einer Mehrzahl von Verbrennungsmotor-Maschinen-Kombinationen.

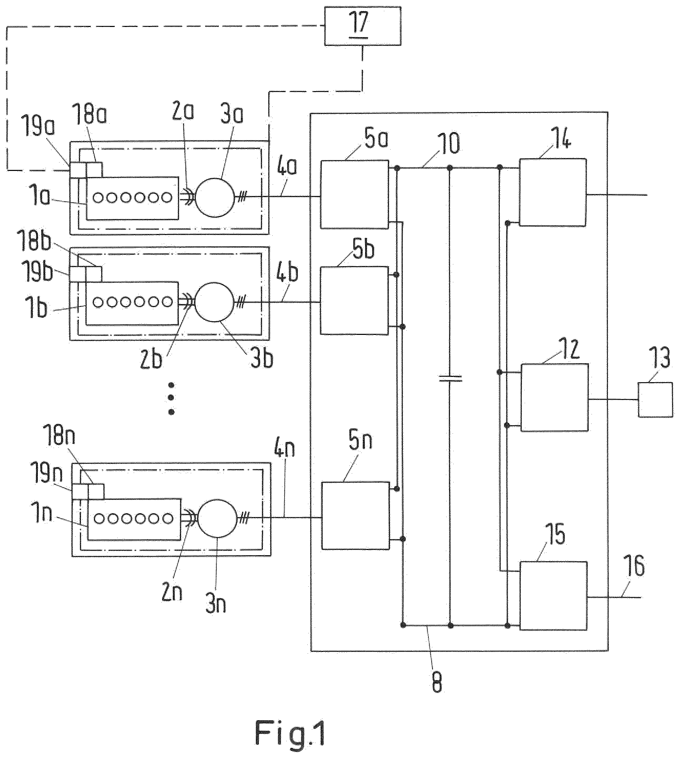

Das in Fig. 1 dargestellte Ausführungsbeispiel weist eine Mehrzahl von Verbrennungsmotor-Maschinen-Kombinationen 1, 3 auf, wobei die Verbrennungsmotoren 1a, 1b, ..., 1n vorzugsweise Dieselmotoren sind. Bei den elektrischen Maschinen 3a, 3b, ..., 3n handelt es sich z.B. um Permanentmagnet-Synchronmotoren. Dargestellt sind jeweils drei Exemplare der Komponenten, wobei die drei Punkte zwischen den Kombinationen 1b, 3b und 1n, 3n andeuten, dass noch weitere Exemplare vorhanden sein können. Die Verbrennungsmotoren 1 sind jeweils über eine Antriebswelle mit Kupplung 2a, 2b, ..., 2n mit der zugeordneten elektrischen Maschine 3 gekoppelt.

Jede der Kombinationen 1, 3 ist über eine dreiphasige Anschlussleitung 4a, 4b, ..., 4n mit einem der Kombination 1, 3 zugeordneten Generator-Gleichrichter 5a, 5b, ..., 5n verbunden. Die Gleichrichter 5 sind an einen Gleichspannungs-Zwischenkreis mit den Leitungen 8, 10 verbunden.

Die Motoren 1 sind jeweils mit einem Kühlkreislauf 18a, 18b, ..., 18n kombiniert, in dem bei Betrieb des Kühlkreislaufs 18 Kühlflüssigkeit zirkuliert und den Motor 1 kühlt. Jeder Kühlkreislauf 18 ist mit zumindest einem Temperaturfühler 19a, 19b, ... 19n kombiniert, der die Temperatur der Kühlflüssigkeit misst. Wie durch eine gestrichelte Linie oben in Fig. 1 lediglich für den Temperaturfühler 19a dargestellt ist, sind die Temperaturfühler 19 über eine Signalverbindung mit einer Steuerung 17 verbunden, die den Betrieb der Kombinationen 1, 3 steuert. Durch eine gestrichelte Linie von der Steuerung 17 zu der oben in Fig. 1 dargestellten Kombination 1a, 3a ist angedeutet, dass die Steuerung den Betrieb jeder der Kombinationen 1, 3 Steuern kann, insbesondere den jeweiligen Verbrennungsmotor 1 starten und stoppen kann.

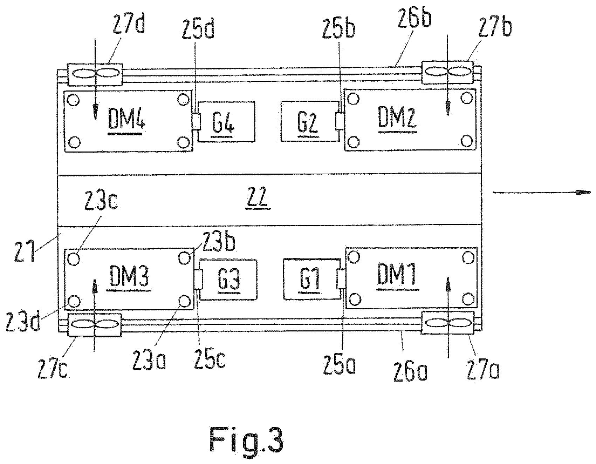

Ein Hilfsbetriebe-Wechselrichter 12 ist mit seinen beiden gleichspannungsseitigen Anschlussleitungen an die Leitungen 8, 10 des Zwischenkreises angeschlossen. Mit seiner Wechselspannungsseite ist der Hilfsbetriebe-Wechselrichter 12 elektrisch an Belüftungseinheiten 13 zur Belüftung und somit Kühlung der Verbrennungsmotor-Maschinen-Kombinationen 1, 3 angeschlossen, wobei die Belüftungseinheiten 13 schematisch durch ein Rechteck dargestellt sind. Figur 3 zeigt ein konkretes Ausführungsbeispiel, in dem vier Belüftungseinheiten dargestellt sind.

Ferner sind an den Gleichspannungszwischenkreis ein Traktionsmotor-Wechselrichter 14 und ein Sammelschienen-Wechselrichter 15 angeschlossen. Während des Betriebes des Schienenfahrzeugs versorgt der Traktionsmotor-Wechselrichter 14 zumindest einen Traktionsmotor mit Wechselstrom und somit mit elektrischer Energie. Der Sammelschienen-Wechselrichter 15 versorgt über eine Zug-Sammelschiene 16 elektrische Verbraucher wie zum Beispiel Klimaanlage, Heizung, Beleuchtungsanlage.

Außer den Belüftungseinheiten 13 kann der Hilfsbetriebe-Wechselrichter 12 oder ein weiterer, nicht dargestellte Hilfsbetriebe-Wechselrichter weitere Hilfsbetriebe mit elektrischer Energie aus dem Gleichspannungszwischenkreis versorgen.

Wenn von den an den Gleichspannungszwischenkreis angeschlossenen elektrischen Verbrauchern nicht die maximal mögliche elektrische Leistung benötigt wird, die die Verbrennungsmotoren 1 über ihre elektrischen Maschinen 3 erzeugen können, können aufgrund der Mehrzahl der Verbrennungsmotor-Maschinen-Kombinationen 1, 3 einzelne Kombinationen 1, 3 abgeschaltet werden, d.h. der Verbrennungsmotor der Kombination ist außer Betrieb. Alternativ kann eine solche Kombination im Leerlauf des Verbrennungsmotors betrieben werden. Die Entscheidung über eine Abschaltung des Verbrennungsmotors oder einen Leerlaufbetrieb kann eine automatische Steuerung treffen, z.B. ein Fahrer-Assistenz-System. Alternativ kann der Fahrer, d.h. der Fahrzeugführer, die Entscheidung selbst treffen oder beeinflussen.

Die Anzahl der Kombinationen 1, 3, auf die die Erzeugung elektrischer Energie aufgeteilt werden soll, kann insbesondere in Abhängigkeit vom momentanen Leistungsbedarf bzw. von dem angeforderten Leistungsbedarf getroffen werden. Insbesondere kann dabei der Leistungsbedarf bzw. die Leistungsanforderung mit vorgegebenen Leistungsschwellen verglichen werden, für die Informationen für den Betrieb der Motor-Maschinen-Kombinationen hinterlegt sind.

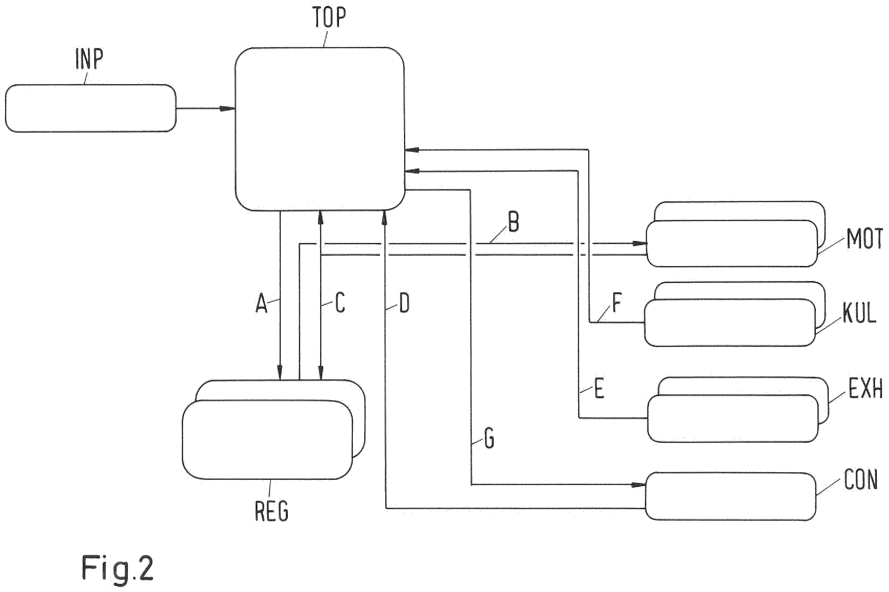

In Fig. 2 sind Eingaben, die z.B. der Fahrzeugführer oder das Fahrer-Assistenzsystem bereitstellen, für den Betrieb einer in Fig. 2 dargestellten Steuerung durch den Block INP dargestellt. Sie werden einer übergeordneten Fahrzeugsteuerung TOP übermittelt. Die übergeordnete Fahrzeugsteuerung TOP hat insbesondere die Funktion, Betriebsgrößen wie z.B. die Leistungsbilanz der gesteuerten Motor-Maschinen-Kombinationen zu erstellen und eine Priorisierung bei der Auswahl der zu betreibenden Verbrennungsmotoren der Anordnung zu treffen.

Wie Pfeil A andeutet, steuert die übergeordnete Fahrzeugsteuerung TOP den Betrieb einer untergeordneten Motor-Maschinen-Steuerung bzw. -regelung REG. Diese untergeordnete Steuerung REG hat die Aufgabe, den Start und den Stopp der einzelnen Verbrennungsmotoren der Anordnung MOT zu steuern (wie Pfeil B andeutet) und dabei insbesondere auf eine über längere Zeiträume gleichmäßige Belastung oder gleichmäßigen Betrieb der Verbrennungsmotoren zu achten. Die Kombination der Steuerungen TOP, REG ist ein Ausführungsbeispiel der in Fig. 1 dargestellten Steuerung 17. Wie Doppelpfeil C andeutet, tauschen die übergeordnete Steuerung TOP und die untergeordnete Steuerung REG während des Betriebes Informationen untereinander aus. Z.B. überträgt die untergeordnete Steuerung REG Informationen über die gleichmäßige oder ungleichmäßige Nutzung der einzelnen Verbrennungsmotoren zu der übergeordneten Steuerung TOP. Entsprechende Informationen sind z.B. Prozessgrößen wie Drehzahlen, Temperaturen, elektrische Ströme, jedoch auch Fehlermeldungen. Die übergeordnete Steuerung TOP überträgt an die untergeordnete Steuerung REG insbesondere für jeden der Verbrennungsmotoren einen Leistungssollwert und/oder die Vorgabe, welche Verbrennungsmotoren in Betrieb sein sollen (Pfeil A). Die untergeordnete Steuerung REG überträgt an die Motor-Maschinen-Kombinationen außer den Start- und Stoppbefehlen auch Leistungs- und/oder Drehzahlsollwerte.

Die elektrischen Verbraucher, die insbesondere die Traktionsmotoren, die Hilfsbetriebe und die über die Zugsammelschiene versorgten Verbraucher sind, sind in Fig. 2 schematisch durch den Block CON dargestellt. Von der übergeordneten Steuerung TOP können Steuerbefehle oder andere Vorgaben an die Verbraucher übertragen werden (Pfeil G), z.B. Traktionskräfte für das Traktionssystem und Bremskräfte für das Bremssystem. Umgekehrt können die Verbraucher CON Informationen über ihren Betrieb (z.B. tatsächliche elektrische Leistungen oder Kräfte) sowie Fehlermeldungen an die übergeordnete Steuerung TOP übertragen (Pfeil D).

Mit EXH ist das Abgassystem der Verbrennungsmotoren dargestellt. Dazu gehören auch Partikelfilter, insbesondere wenn es sich um Dieselmotoren handelt. Von den Partikelfiltern werden Informationen über ihre Beladung mit Partikeln an die übergeordnete Steuerung TOP übertragen (Pfeil E).

Die Kühleinrichtung KUL zum Kühlen der Verbrennungsmotoren bzw. der Motor-Maschinen-Kombinationen überträgt an die übergeordnete Steuerung TOP Informationen über ihren Betrieb, wie z.B. Temperaturen und Fehlermeldungen (Pfeil F). Die Kühleinrichtung KUL ist mit einer Vorwärmeinrichtung kombiniert, die die Kühlflüssigkeit in einem Kühlkreislauf erwärmen kann, um den Motor vor einem Start vorzuwärmen.

Der Zeitpunkt, zu dem Verbrennungsmotoren während eines Teillastbetriebes gestartet oder gestoppt werden, hängt insbesondere vom gegenwärtigen und zukünftigen Gesamt-Leistungsbedarf ab. Ist der zukünftige Gesamt-Leistungsbedarf nicht bekannt, wie es z.B. bei einem vorliegenden gespeicherten Lastprofil oder im Fall eines entsprechend ausgestalteten Fahrer-Assistenzsystems der Fall ist, dann ist es insbesondere möglich, dass der Fahrzeugführer Informationen über den zukünftigen Leistungsbedarf dem Steuerungssystem mitteilt. Z.B. kann der Fahrzeugführer auf diese Weise eine Prognose des zukünftigen Gesamt-Leistungsbedarfs an das System mitteilen. Der Fahrzeugführer kann dies z.B. durch Wahl eines vordefinierten Betriebsmodus durchführen. Alternativ oder zusätzlich kann der Fahrzeugführer selbst die zu betreibenden Motoren oder zumindest die zu betreibende Motoranzahl eingeben.

Im speziellen Ausführungsbeispiel der Fig. 3 sind vier Verbrennungsmotor-Maschinen-Kombinationen gemeinsam in einem Maschinenraum 21 angeordnet, der über einen Mittelgang 22 verfügt. Der Raum für den Fahrzeugführer befindet sich z.B. rechts von dem Maschinenraum 21, wie der Pfeil rechts in Fig. 3 andeutet. Die einzelnen Verbrennungsmotoren, z.B. Dieselmotoren, sind mit den Bezugszeichen DM1, DM2, DM3 und DM4 bezeichnet. Einige Schwingungsdämpfer der Motoren DM sind durch kleine Kreise mit den Bezugszeichen 23a bis 23d bezeichnet. Jeder der Motoren DM ist mechanisch über eine nicht näher dargestellte Antriebswelle mit einer elektrischen Maschine G1, G2, G3, G4 gekoppelt. Im Antriebsstrang zwischen dem Verbrennungsmotor DM und der elektrischen Maschine G, insbesondere im Bereich einer Kupplung des Antriebsstranges, ist jeweils ein Temperaturfühler 25a, 25b, 25c, 25d angeordnet.

Die Motor-Maschinen-Kombinationen sind in einem gemeinsamen, nicht vollständig in Teile abgeschotteten Maschinenraum 21 angeordnet, sodass innerhalb des Maschinenraums 21 ein Luftaustausch stattfinden kann. In den Seitenwänden 26a, 26b des Maschinenraums 21, die auch die Außenwände des Schienenfahrzeugs bilden, befinden sich Lufteintrittsöffnungen mit jeweils zumindest einem Ventilator 27a, 27b, 27c, 27d. Die Ventilatoren 27 saugen Luft aus der Umgebung des Schienenfahrzeugs durch die Seitenwände 26 hindurch in den Maschinenraum, wobei jede der Belüftungseinheiten einer der Verbrennungsmotor-Maschinen-Kombinationen zugeordnet ist, d.h. der angesaugte Luftstrom kühlt primär die zugeordnete Kombination. Der Luftaustritt befindet sich z.B. im Dachbereich des Maschinenraums. Die Ventilatoren werden insbesondere abhängig von den Temperatur-Messwerten betrieben, die der jeweils derselben Verbrennungsmotor-Maschinen-Kombination zugeordnete Temperaturfühler 25 misst.

Die von den Belüftungseinheiten während ihres Betriebes von außen angesaugte Kühlluft strömt zunächst am Verbrennungsmotor DM entlang und dann an der elektrischen Maschine G vorbei, bis die erwärmte Kühlluft oben am Dach wieder in die Umgebung austritt.

Insbesondere in dem Ausführungsbeispiel der Fig. 3 sind die Temperatursensoren so im Maschinenraum angeordnet, dass die vor Übertemperatur zu schützenden Komponenten wie die Kupplung zwischen Motor und Maschine, die elektrischen Maschinenschütze und die Schwingungsdämpfer 23 auf Übertemperatur überwacht werden können. Insbesondere können daher mehr Temperatursensoren als im Ausführungsbeispiel der Fig. 3 dargestellt verwendet werden. Z.B. wird in diesem Fall zu jedem Zeitpunkt der höchste gemessene Temperaturwert der Motor-Maschinen-Kombination als Temperatur-Messwert für die Steuerung der zugeordneten Belüftungseinheit verwendet.

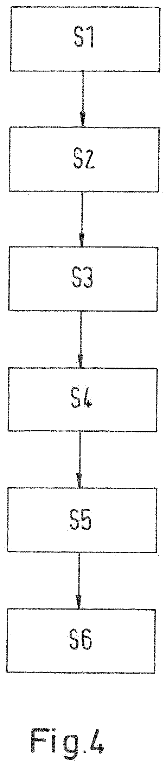

Im Folgenden wird ein Ausführungsbeispiel eines Verfahrens beschrieben, durch das Motoren für den Betrieb und damit für die Erzeugung elektrischer Leistung ausgewählt werden können. Dabei wird Bezug auf Fig. 4 genommen. In Schritt S1, zu Beginn des Betriebes eines Schienenfahrzeugs, werden zunächst sämtliche Verbrennungsmotoren der Anordnung gestartet, optional nacheinander, wie dies an sich aus dem Stand der Technik bekannt ist. In dem folgenden Schritt S2 wird ein Teil der Verbrennungsmotoren wieder abgeschaltet, da in der momentanen Betriebsphase lediglich ein Teillastbetrieb stattfinden soll. Alternativ werden nicht alle Verbrennungsmotoren in Schritt S1 gestartet, so dass in Schritt S2 kein Verbrennungsmotor wieder abgeschaltet wird oder weniger Verbrennungsmotoren wieder abgeschaltet werden. Insbesondere werden der oder die Verbrennungsmotoren, der/die noch nicht in Betrieb genommen worden ist/sind, in diesem Fall vorgewärmt.

In dem folgenden Schritt S3 werden die Temperaturen der abgeschalteten Verbrennungsmotoren überwacht. Wenn dabei festgestellt wird, dass die Temperatur eines der Verbrennungsmotoren unter einen vorgegebenen Temperaturgrenzwert fällt, wird der Motor (wieder) gestartet (Schritt S4), um eine Auskühlung mit anschließender Vorwärmung des Motors zu vermeiden.

In einer anschließenden Betriebsphase (Schritt S5), die alternativ auch vor oder während der Betriebsphase der Schritte S2 und S3 stattfinden kann, wird laufend die Temperatur zumindest einer der Verbrennungsmotor-Maschinen-Kombinationen überwacht und wird eine Belüftungseinrichtung zur Belüftung und somit Kühlung der zugeordneten Kombination lediglich dann betrieben, wenn ein vorgegebener Temperaturgrenzwert überschritten ist. Wenn ein weiterer Temperaturgrenzwert, der unterhalb des zuvor genannten Temperaturgrenzwertes liegt, unterschritten wird/ist, wird sogar während des Betriebes des zugeordneten Verbrennungsmotors auf einen Betrieb der zugeordneten Belüftungseinheit verzichtet, d.h. die Einheit bleibt abgeschaltet. Wenn der niedrigere vorgegebene Temperaturgrenzwert überschritten wird und der zugeordnete Verbrennungsmotor in Betrieb ist, wird die zugeordnete Belüftungseinheit betrieben (Schritt S6).

## Patentansprüche

1. Anordnung zum Versorgen eines Schienenfahrzeugs mit elektrischer Energie, wobei die Anordnung aufweist:
- zumindest zwei Verbrennungsmotoren (1),
- für die zumindest zwei Verbrennungsmotoren (1) jeweils eine zugeordnete elektrische Maschine (3) zum Erzeugen der elektrischen Energie, wobei die elektrische Maschine (3) mechanisch mit dem Verbrennungsmotor (1) gekoppelt ist, sodass sie bei einem Generator-Betrieb der elektrischen Maschine (3) von dem Verbrennungsmotor (1) angetrieben wird, sodass zumindest eine erste und eine zweite Verbrennungsmotor-Maschinen-Kombination gebildet ist,
- eine gemeinsame Steuerung (17) der Verbrennungsmotor-Maschinen-Kombinationen, wobei die Steuerung (17) ausgestaltet ist, die Verbrennungsmotoren (1) bei Bedarf einzeln zu starten,
- zumindest eine Vorwärmeinrichtung (KUL), die ausgestaltet ist, die Verbrennungsmotoren (1) vor einem Start vorzuwärmen,
- eine Temperatur-Ermittlungseinrichtung (19),
wobei die Steuerung (17) dazu fähig ist, während eines Betriebes eines der Verbrennungsmotoren (1) einen anderen der Verbrennungsmotoren (1) zu starten, wenn aufgrund einer Abkühlung des anderen Verbrennungsmotors eine von der Temperatur-Ermittlungseinrichtung ermittelte Temperatur des anderen Verbrennungsmotors einen ersten vorgegebenen Temperaturgrenzwert erreicht oder unterschreitet und der andere Verbrennungsmotor deswegen vor Auskühlung bedroht ist, und
wobei die Steuerung ausgestaltet ist zu ermitteln, wie viele der Verbrennungsmotoren (1) während eines Betriebszeitraumes des Schienenfahrzeugs gleichzeitig zu betreiben sind, wobei bei der Auswahl der zu betreibenden Verbrennungsmotoren (1) berücksichtigt wird, ob ein oder mehrere der Verbrennungsmotoren vor Auskühlung bedroht sind, und wobei einer der Verbrennungsmotoren (1), der vor Auskühlung bedroht ist, bevorzugt ausgewählt und somit gestartet wird,
**dadurch gekennzeichnet, dass**
die Temperatur-Ermittlungseinrichtung (19) mit den Verbrennungsmotoren (1) thermisch gekoppelt ist und über eine Signalverbindung mit der Steuerung (17) verbunden ist, um Informationen über Temperaturen der Verbrennungsmotoren (1) an die Steuerung (17) zu übermitteln, und
die Anordnung eine Belüftungseinrichtung zum Belüften und somit zum Kühlen der Motor-Maschinen-Kombinationen aufweist, wobei jeder der Motor-Maschinen-Kombinationen einer von mehreren Belüftungseinheiten (27) der Belüftungseinrichtung zugeordnet ist, so dass die Belüftungseinheiten (27) während ihres Betriebes hauptsächlich oder ausschließlich jeweils die ihr zugeordnete Motor-Maschinen-Kombination (1, 3) kühlen, wobei jede der Motor-Maschinen-Kombinationen (1, 3) mit jeweils zumindest einem Temperatursensor (25) kombiniert ist und wobei die Belüftungseinheiten (27) trotz des Betriebes des Schienenfahrzeugs jeweils nur dann eingeschaltet sind, wenn der Verbrennungsmotor (1) der ihr zugeordneten Motor-Maschinen-Kombination (1, 3) in Betrieb ist und wenn ein Temperatur-Messwert des Temperatursensors (25) oder der Temperatursensoren der ihr zugeordneten Motor-Maschinen-Kombination (1, 3) ein Temperatur-Kriterium erfüllt, nämlich entweder größer als ein zweiter vorgegebener Temperaturgrenzwert ist oder größer als oder gleich dem zweiten vorgegebenen Temperaturgrenzwert ist.

2. Anordnung nach dem vorhergehenden Anspruch, wobei die Steuerung (17) den anderen Verbrennungsmotor bei Erreichen oder Unterschreiten des ersten vorgegebenen Temperaturgrenzwertes startet, obwohl eine Motorleistung des Verbrennungsmotors oder der Verbrennungsmotoren, die bereits in Betrieb sind, für die Versorgung des Schienenfahrzeugs mit elektrischer Energie ausreicht.

3. Anordnung nach einem der vorhergehenden Ansprüche, wobei die Steuerung (17) die Motorleistung des bereits in Betrieb befindlichen Verbrennungsmotors oder der bereits in Betrieb befindlichen Verbrennungsmotoren reduziert, sobald der andere Verbrennungsmotor gestartet ist und zu einer Gesamt-Motorleistung sämtlicher in Betrieb befindlicher Verbrennungsmotoren beiträgt.

4. Anordnung nach einem der vorhergehenden Ansprüche, wobei ein Schema vorgegeben ist, gemäß dem unter Berücksichtigung des momentanen Betriebszustandes der Anordnung mit mehreren Verbrennungsmotoren und unter Berücksichtigung der momentanen Anforderungen an die Anordnung die momentan für die Erzeugung von elektrischer Energie zu nutzenden Verbrennungsmotoren auswählen sind, und wobei die Steuerung ausgestaltet ist, wenn die Voraussetzungen für den Start eines vor Auskühlung bedrohten Verbrennungsmotors vorliegen, die gemäß dem Schema vorzunehmende Auswahl abzuändern, indem der vor Auskühlung bedrohte Verbrennungsmotor gestartet wird.

5. Anordnung nach Anspruch 4, wobei gemäß dem Schema eine statische Priorisierung bei der Auswahl der Verbrennungsmotoren für den Betrieb durchgeführt wird, bei der die statische Priorisierung nach langfristigen, langsam ändernden Kriterien stattfindet, und wobei auch eine dynamische Priorisierung bei der Auswahl vorgenommen wird, nach kurzfristigen Kriterien, die höher als die Kriterien der statischen Priorisierung gewichtet sind, wobei der Start eines vor Auskühlung bedrohten Verbrennungsmotors ein kurzfristiges Kriterium ist.

6. Schienenfahrzeug, aufweisend eine Anordnung nach einem der Ansprüche 1-5.

7. Verfahren zum Betreiben einer Anordnung zum Versorgen eines Schienenfahrzeugs mit elektrischer Energie, wobei:
- bei Bedarf zumindest zwei Verbrennungsmotoren (1) der Anordnung gleichzeitig betrieben werden,
- für die Erzeugung der elektrischen Energie jeweils eine elektrische Maschine (3) genutzt wird, die mechanisch mit dem Verbrennungsmotor (1) gekoppelt ist, sodass sie bei einem Generator-Betrieb der elektrischen Maschine (3) von dem Verbrennungsmotor (1) angetrieben wird und sodass zumindest eine erste und eine zweite Verbrennungsmotor-Maschinen-Kombination gebildet ist,
- die Verbrennungsmotoren (1) optional bei Bedarf vor einem Start vorgewärmt werden,
- Informationen über ermittelte Temperaturen der Verbrennungsmotoren an eine Steuerung (17) der Anordnung übermittelt werden,
wobei die Steuerung (17) während eines Betriebes eines der Verbrennungsmotoren einen anderen der Verbrennungsmotoren startet, wenn aufgrund einer Abkühlung des anderen Verbrennungsmotors eine ermittelte Temperatur des anderen Verbrennungsmotors einen ersten vorgegebenen Temperaturgrenzwert erreicht oder unterschreitet und der andere Verbrennungsmotor deswegen vor Auskühlung bedroht ist,
wobei die Steuerung ermittelt, wie viele der Verbrennungsmotoren (1) während eines Betriebszeitraumes des Schienenfahrzeugs gleichzeitig zu betreiben sind, wobei bei der Auswahl der zu betreibenden Verbrennungsmotoren (1) berücksichtigt wird, ob ein oder mehrere der Verbrennungsmotoren vor g7 Auskühlung bedroht sind, und wobei einer der Verbrennungsmotoren (1), der vor Auskühlung bedroht ist, bevorzugt ausgewählt und somit gestartet wird,
**dadurch gekennzeichnet, dass**
jede der Motor-Maschinen-Kombinationen bei Bedarf von einer ihr zugeordneten Belüftungseinheit belüftet und somit gekühlt wird, so dass die Belüftungseinheiten (27) während ihres Betriebes hauptsächlich oder ausschließlich jeweils die ihr zugeordnete Motor-Maschinen-Kombination kühlen, wobei für jede der Motor-Maschinen-Kombinationen eine Temperatur gemessen wird und wobei die Belüftungseinheiten (27) trotz des Betriebes des Schienenfahrzeugs jeweils nur dann eingeschaltet sind, wenn der Verbrennungsmotor der ihr zugeordneten Motor-Maschinen-Kombination in Betrieb ist und wenn ein Temperatur-Messwert des Temperatursensors oder der Temperatursensoren der ihr zugeordneten Motor-Maschinen-Kombination ein Temperatur-Kriterium erfüllt, nämlich entweder größer als ein zweiter vorgegebener Temperaturgrenzwert ist oder größer als oder gleich dem zweiten vorgegebenen Temperaturgrenzwert ist.

8. Verfahren nach Anspruch 7, wobei die Steuerung (17) den anderen Verbrennungsmotor bei Erreichen oder Unterschreiten des ersten vorgegebenen Temperaturgrenzwertes startet, obwohl eine Motorleistung des Verbrennungsmotors oder der Verbrennungsmotoren, die bereits in Betrieb sind, für die Versorgung des Schienenfahrzeugs mit elektrischer Energie ausreicht.

9. Verfahren nach Anspruch 7 oder 8, wobei die Steuerung (17) die Motorleistung des bereits in Betrieb befindlichen Verbrennungsmotors oder der bereits in Betrieb befindlichen Verbrennungsmotoren reduziert, sobald der andere Verbrennungsmotor gestartet ist und zu einer Gesamt-Motorleistung sämtlicher in Betrieb befindlicher Verbrennungsmotoren beiträgt.

10. Verfahren nach einem der Ansprüche 7 bis 10, wobei ein Schema vorgegeben ist, gemäß dem unter Berücksichtigung des momentanen Betriebszustandes der Anordnung mit mehreren Verbrennungsmotoren und unter Berücksichtigung der momentanen Anforderungen an die Anordnung die momentan für die Erzeugung von elektrischer Energie zu nutzenden Verbrennungsmotoren auswählen sind, und wobei, wenn die Voraussetzungen für den Start eines vor Auskühlung bedrohten Verbrennungsmotors vorliegen, die gemäß dem Schema vorzunehmende Auswahl abgeändert wird, indem der vor Auskühlung bedrohte Verbrennungsmotor gestartet wird.

11. Verfahren nach Anspruch 10, wobei gemäß dem Schema eine statische Priorisierung bei der Auswahl der Verbrennungsmotoren für den Betrieb durchgeführt wird, bei der die statische Priorisierung nach langfristigen, langsam ändernden Kriterien stattfindet, und wobei auch eine dynamische Priorisierung bei der Auswahl vorgenommen wird, nach kurzfristigen Kriterien, die höher als die Kriterien der statischen Priorisierung gewichtet sind, wobei der Start eines vor Auskühlung bedrohten Verbrennungsmotors ein kurzfristiges Kriterium ist.

## Claims

1. Arrangement for supplying a rail vehicle with electrical energy,
wherein the arrangement comprises:
- at least two internal combustion engines (1),
- for each of the at least two internal combustion engines (1) an associated electrical machine (3) for generating the electrical energy, wherein the electrical machine (3) is mechanically coupled to the internal combustion engine (1), so that it is driven by the internal combustion engine (1) during generator operation of the electrical machine (3), so that at least a first and a second internal combustion engine-machine combination is formed,
- a common controller (17) of the combustion engine-machine combinations, wherein the controller (17) is designed to start the combustion engines (1) individually as required,
- at least one preheating device (KUL), which is designed to preheat the internal combustion engines (1) before a start,
- a temperature determination device (19),
wherein the controller (17) is capable of starting another of the internal combustion engines (1) during operation of one of the internal combustion engines (1), if, due to cooling of the other internal combustion engine, a temperature of the other internal combustion engine determined by the temperature determination device reaches or falls below a first predetermined temperature threshold value and the other internal combustion engine is therefore threatened by cooling down, and
the control system being designed to determine how many of the internal combustion engines (1) are to be operated simultaneously during an operating period of the rail vehicle, the selection of the internal combustion engines (1) to be operated taking into account whether one or more of the internal combustion engines are at risk of cooling down, and wherein one of the combustion engines (1) which is at risk of cooling down is preferably selected and thus started,
**characterized in that**
the temperature detection device (19) is thermally coupled to the combustion engines (1) and is connected via a signal connection to the controller (17) to transmit information about temperatures of the internal combustion engines (1) to the controller (17), and
the arrangement has a ventilation device for ventilating and thus for cooling the combustion engine-machine combinations, wherein each of the combustion engine-machine combinations is assigned to one of a plurality of ventilation units (27) of the ventilation device, so that the ventilation units (27) during their operation mainly or exclusively cool the combustion engine-machine combination (1, 3) assigned to it, wherein each of the combustion engine-machine combinations (1, 3) is combined with at least one temperature sensor (25) in each case and wherein the ventilation units (27), despite the operation of the rail vehicle, are in each case only switched on when the internal combustion engine (1) of the combustion engine-machine combination (1, 3) assigned to it is in operation and when a temperature measured value of the temperature sensor (25) or of the temperature sensors of the combustion engine-machine combination (1, 3) assigned to it satisfies a temperature criterion, namely either is greater than a second predetermined temperature threshold value or is greater than or equal to the second predetermined temperature threshold value.

2. The arrangement according to the preceding claim, wherein the controller (17) starts the other internal combustion engine when the temperature reaches or falls below the first predetermined temperature threshold value, although an engine power of the internal combustion engine or of the internal combustion engines which are already in operation is sufficient for supplying the rail vehicle with electrical energy

3. The arrangement according to one of the preceding claims, wherein the control system reduces the engine power of the internal combustion engine already in operation or internal combustion engines already in operation as soon as the other internal combustion engine has started and contributes to a total engine power of all internal combustion engines in operation.

4. The arrangement according to one of the preceding claims, wherein a scheme is predetermined, according to which the internal combustion engines currently to be used for the generation of electrical energy are to be selected, taking into account the instantaneous operating state of the arrangement with a plurality of internal combustion engines and taking into account the instantaneous requirements for the arrangement, and wherein the controller is designed to change the selection to be made according to the scheme when the preconditions for the start of an internal combustion engine threatened with cooling down are fulfilled, by starting the internal combustion engine threatened with cooling down.

5. The arrangement according to claim 4, wherein according to the scheme a static prioritization is carried out in the selection of the combustion engines for operation, in which the static prioritization takes place according to long-term, slowly changing criteria, and wherein a dynamic prioritization is also carried out at the selection, according to short-term criteria which are weighted higher than the criteria of the static prioritization, wherein the start of a combustion engine threatened by cooling down is a short-term criterion.

6. A rail vehicle comprising an arrangement according to any one of claims 1-5.

7. A method for operating an arrangement for supplying a rail vehicle with electrical energy, wherein
- at least two internal combustion engines (1) of the arrangement are operated simultaneously as required,
- an electric machine (3) is used in each case to generate the electrical energy, which is mechanically coupled to the internal combustion engine (1) so that it is driven by the internal combustion engine (1) during generator operation of the electric machine (3) and so that at least a first and a second internal combustion engine-machine combination is formed,
- the internal combustion engines (1) are optionally preheated as required before starting,
- information about determined temperatures of the combustion engines is transmitted to a controller (17) of the arrangement,
wherein the controller (17) starts another of the internal combustion engines during operation of one of the internal combustion engines if due to cooling of the other internal combustion engine a determined temperature of the other internal combustion engine reaches or falls below a first predetermined temperature threshold value and the other internal combustion engine is therefore at risk of cooling down,
wherein the controller determines how many of the internal combustion engines (1) are to be operated simultaneously during an operating period of the rail vehicle, wherein, when selecting the internal combustion engines (1) to be operated, it is taken into account whether one or more of the internal combustion engines are at risk of cooling down, and wherein one of the internal combustion engines (1) which is at risk of cooling down is preferably selected and thus started,
**characterized in that**
each of the combustion engine-machine combinations is ventilated and thus cooled as required by a ventilation unit assigned to it, so that the ventilation units (27) mainly or exclusively cool the combustion engine-machine combination assigned to it during its operation, wherein a temperature is measured for each of the combustion engine-machine combinations and wherein the ventilation units (27) are only switched on in each case despite the operation of the rail vehicle, when the combustion engine of the combustion engine-machine combination assigned to it is in operation and when a temperature measured value of the temperature sensor or the temperature sensors of the combustion engine-machine combination assigned to it fulfills a temperature criterion, namely either is greater than a second predetermined temperature threshold value or is greater than or equal to the second predetermined temperature threshold value.

8. The method according to claim 7, wherein the control unit (17) starts the other combustion engine when the temperature reaches or falls below the first predetermined temperature threshold value, although an engine power of the combustion engine or of the combustion engines which are already in operation is sufficient to supply the rail vehicle with electrical energy.

9. The method according to claim 7 or 8, wherein the controller (17) reduces the engine power of the internal combustion engine or engines already in operation as soon as the other internal combustion engine has started and contributes to a total engine power of all internal combustion engines in operation.

10. The method according to one of claims 7 to 10, wherein a scheme is provided, according to which, taking into account the instantaneous operating state of the arrangement with a plurality of internal combustion engines and taking into account the instantaneous requirements for the arrangement, the internal combustion engines to be used at the moment for the generation of electrical energy are to be selected, and wherein, if the preconditions for starting an internal combustion engine threatened with cooling down are present, the selection to be made according to the scheme is modified by starting the internal combustion engine threatened with cooling down.

11. The method according to claim 10, wherein according to the scheme a static prioritization is carried out in the selection of the internal combustion engines for operation, in which the static prioritization takes place according to long-term, slowly changing criteria, and wherein a dynamic prioritization is also carried out at the selection, according to short-term criteria which are weighted higher than the criteria of the static prioritization, wherein the start of an internal combustion engine threatened by cooling is a short-term criterion.

## Revendications

1. Agencement pour l'alimentation en énergie électrique d'un véhicule ferroviaire,
l'agencement comprenant :
- au moins deux moteurs à combustion interne (1),
- pour les au moins deux moteurs à combustion interne (1), respectivement une machine électrique (3) associée pour produire l'énergie électrique, la machine électrique (3) étant couplée mécaniquement au moteur à combustion interne (1), de sorte qu'elle est propulsée par le moteur à combustion interne (1) lors d'un fonctionnement en générateur de la machine électrique (3), de sorte que au moins une première et une deuxième combinaison moteur à combustion interne-machine est formée,
- une commande commune (17) des combinaisons moteur à combustion interne-machine, la commande (17) étant conçue pour démarrer individuellement les moteurs à combustion interne (1) en cas de besoin,
- au moins un dispositif de préchauffage (KUL), qui est conçu pour préchauffer les moteurs à combustion interne (1) avant un démarrage,
- un dispositif de détection de température (19),
la commande (17) étant capable de démarrer un autre des moteurs à combustion interne (1) pendant un fonctionnement d'un des moteurs à combustion interne (1), lorsque, en raison d'un refroidissement de l'autre moteur à combustion interne, une température de l'autre moteur à combustion interne déterminée par le dispositif de détection de température atteint ou passe en dessous d'une première valeur limite de température prédéfinie et lorsque l'autre moteur à combustion interne est de ce fait menacé de refroidissement, et
la commande étant conçue pour déterminer combien des moteurs à combustion interne (1) sont à faire fonctionner simultanément pendant une période de fonctionnement du véhicule ferroviaire, la sélection des moteurs à combustion interne à faire fonctionner tenant compte du fait qu'un ou plusieurs des moteurs à combustion interne sont menacés de refroidissement, et dans lequel un des moteurs à combustion interne (1) qui est menacé de refroidissement est de préférence sélectionné et ainsi démarré,
**caractérisé en ce que**
le dispositif de détection de température (19) est couplé thermiquement aux moteurs à combustion interne (1) et est relié par une liaison de signal à la commande (17) pour transmettre des informations sur les températures des moteurs à combustion interne (1) à la commande (17), et
l'agencement présente un dispositif de ventilation pour ventiler et ainsi refroidir les combinaisons moteur-machine, chacune des combinaisons moteur-machine étant associée à une de plusieurs unités de ventilation (27) du dispositif de ventilation, de sorte que les unités de ventilation (27) refroidissent pendant leur fonctionnement principalement ou exclusivement respectivement la combinaison moteur-machine (1, 3) associée à elle, dans lequel chacune des combinaisons moteur-machine (1, 3) est combinée respectivement avec au moins un capteur de température (25) et dans lequel les unités de ventilation (27) ne sont respectivement activées, malgré le fonctionnement du véhicule ferroviaire, que lorsque le moteur à combustion interne (1) de la combinaison moteur-machine (1, 3) qui est associée à elle est en fonctionnement et lorsqu'une valeur de mesure de température du capteur de température (25) ou des capteurs de température de la combinaison moteur-machine (1, 3) qui est associée à elle remplit un critère de température, c'est que la valeur de mesure de température est supérieure à une deuxième valeur limite de température prédéfinie ou bien est supérieure ou égale à la deuxième valeur limite de température prédéfinie.

2. Agencement selon la revendication précédente, dans lequel la commande (17) démarre l'autre moteur à combustion interne lorsque la première valeur limite de température prédéfinie est atteinte ou est passée en dessous, bien qu'une puissance de moteur du moteur à combustion interne ou des moteurs à combustion interne qui sont déjà en service soit suffisante pour l'alimentation du véhicule ferroviaire en énergie électrique.

3. Agencement selon l'une quelconque des revendications précédentes, dans lequel la commande réduit la puissance moteur du moteur à combustion interne ou des moteurs à combustion interne déjà en service dès que l'autre moteur à combustion interne est démarré et contribue à une puissance moteur totale de tous les moteurs à combustion interne en service.

4. Agencement selon l'une quelconque des revendications précédentes, dans lequel un schéma est prédéfini, selon lequel, en tenant compte de l'état de fonctionnement momentané de l'agencement avec plusieurs moteurs à combustion interne et en tenant compte des exigences momentanées envers l'agencement, les moteurs à combustion interne à utiliser momentanément pour la production d'énergie électrique doivent être sélectionnés, et dans lequel la commande est conçue, lorsque les conditions pour le démarrage d'un moteur à combustion interne menacé de refroidissement sont présentes, pour modifier la sélection à effectuer selon le schéma, de sorte que le moteur à combustion interne menacé de refroidissement est démarré.

5. Agencement selon la revendication 4, dans lequel, selon le schéma, une priorisation statique est effectuée lors de la sélection des moteurs à combustion interne pour le fonctionnement, dans laquelle la priorisation statique a lieu selon des critères à long terme qui changent lentement, et dans lequel une priorisation dynamique est également effectuée lors de la sélection, selon des critères à court terme qui sont pondérés plus fortement que les critères de la priorisation statique, le démarrage d'un moteur à combustion interne menacé de refroidissement étant un critère à court terme.

6. Véhicule ferroviaire comprenant un agencement selon l'une quelconque des revendications 1 à 5.

7. Procédé opérationnel d'un agencement pour l'alimentation en énergie électrique d'un véhicule ferroviaire, dans lequel:
- en cas de besoin, au moins deux moteurs à combustion interne (1) de l'agencement sont actionnés simultanément,
- pour la production de l'énergie électrique, une machine électrique (3) est utilisée respectivement, qui est couplée mécaniquement au moteur à combustion interne (1), de sorte qu'elle est propulsée par le moteur à combustion interne (1) lors d'un fonctionnement en générateur de la machine électrique (3) et de sorte qu'au moins une première et une deuxième combinaison moteur à combustion interne-machine est formée,
- les moteurs à combustion interne (1) sont, en option, préchauffés si nécessaire avant un démarrage,
- des informations sur des températures déterminées des moteurs à combustion interne sont transmises à une commande (17) de l'agencement,
dans lequel la commande (17) démarre un autre des moteurs à combustion interne pendant un fonctionnement d'un des moteurs à combustion interne lorsque, en raison d'un refroidissement de l'autre moteur à combustion interne, une température déterminée de l'autre moteur à combustion interne atteint ou passe en dessous d'une première valeur limite de température prédéfinie et lorsque l'autre moteur à combustion interne est de ce fait menacé de refroidissement,
dans lequel la commande détermine combien des moteurs à combustion interne (1) sont à faire fonctionner simultanément pendant une période de fonctionnement du véhicule ferroviaire, la sélection des moteurs à combustion interne à faire fonctionner tenant compte du fait qu'un ou plusieurs des moteurs à combustion interne sont menacés de refroidissement, et dans lequel un des moteurs à combustion interne (1) qui est menacé de refroidissement est de préférence sélectionné et ainsi démarré,
**caractérisé en ce que**
chacune des combinaisons moteur-machine est ventilée en cas de besoin par une unité de ventilation qui est associée à elle et est ainsi refroidie, de sorte que les unités de ventilation (27) refroidissent pendant leur fonctionnement principalement ou exclusivement respectivement la combinaison moteur-machine associée à elle, une température étant mesurée pour chacune des combinaisons moteur-machine et les unités de ventilation (27) n'étant respectivement activées que, malgré le fonctionnement du véhicule ferroviaire, lorsque le moteur à combustion interne de la combinaison moteur-machine associée à elle est en fonctionnement et lorsqu'une valeur de mesure de température du capteur de température ou des capteurs de température de la combinaison moteur-machine associée à elle remplit un critère de température, c'est que la valeur de mesure de température est supérieure à une deuxième valeur limite de température prédéfinie ou bien est supérieure ou égale à la deuxième valeur limite de température prédéfinie.

8. Procédé selon la revendication 7, dans lequel la commande (17) démarre l'autre moteur à combustion interne lorsque la première valeur limite de température prédéfinie est atteinte ou est passée en dessous, bien qu'une puissance de moteur du moteur à combustion interne ou des moteurs à combustion interne qui sont déjà en service soit suffisante pour l'alimentation du véhicule ferroviaire en énergie électrique.

9. Procédé selon la revendication 7 ou 8, dans lequel la commande (17) réduit la puissance moteur du moteur à combustion interne ou des moteurs à combustion interne déjà en service dès que l'autre moteur à combustion interne est démarré et contribue à une puissance moteur totale de tous les moteurs à combustion interne en service.

10. Procédé selon l'une des revendications 7 à 10, dans lequel un schéma est prédéfini, selon lequel, en tenant compte de l'état de fonctionnement momentané de l'agencement avec plusieurs moteurs à combustion interne et en tenant compte des exigences momentanées envers l'agencement, les moteurs à combustion interne à utiliser momentanément pour la production d'énergie électrique doivent être sélectionnés, et dans lequel, lorsque les conditions pour le démarrage d'un moteur à combustion interne menacé de refroidissement sont présentes, la sélection à effectuer selon le schéma est modifiée de sorte que le moteur à combustion interne menacé de refroidissement est démarré.

11. Procédé selon la revendication 10, dans lequel, selon le schéma, une priorisation statique est effectuée lors de la sélection des moteurs à combustion interne pour le fonctionnement, dans laquelle la priorisation statique a lieu selon des critères à long terme qui changent lentement, et dans lequel une priorisation dynamique est également effectuée lors de la sélection, selon des critères à court terme qui sont pondérés plus fortement que les critères de la priorisation statique, le démarrage d'un moteur à combustion interne menacé de refroidissement étant un critère à court terme.
